# EUROPÄISCHE PATENTSCHRIFT

(11) **EP 1 860 424 B1**
(45) Veröffentlichungstag und Bekanntmachung des Hinweises auf die Patenterteilung: **17.08.2011**
(21) Anmeldenummer: 06010813.1
(22) Anmeldetag: 26.05.2006
(51) Int. Cl.: G01Q 70/02

(54) **Selbstausrichtende Abtastsonden für Rastersondenmikroskop**
Self-aligning scanning probes for scanning probe microscope
Sonde à balayage à alignement automatique pour microscope à balayage

(43) Veröffentlichungstag der Anmeldung: 28.11.2007
(73) Patentinhaber: NanoWorld AG, 2007 Neuchâtel (CH)
(72) Erfinder: Sulzbach, Thomas, 91085 Weisendorf (DE); Detterbeck, Manfred, 8280 Kreuzlingen (CH); Burri, Mathieu, 2072 St-Blaise (CH); Richter, Christoph, 90762 Fuerth (DE); Luedge, Hans-Juergen, 07743 Jena (DE)
(74) Vertreter: Klocke, Peter

(56) Entgegenhaltungen:
- EP-A- 0 444 697
- WO-A-93/18525
- PATENT ABSTRACTS OF JAPAN Bd. 017, Nr. 509 (P-1612), 13. September 1993 (1993-09-13) -& JP 05 133738 A (NIKON CORP), 28. Mai 1993 (1993-05-28)
- PATENT ABSTRACTS OF JAPAN Bd. 2002, Nr. 10, 10. Oktober 2002 (2002-10-10) -& JP 2002 168755 A (TOKYO SEIMITSU CO LTD), 14. Juni 2002 (2002-06-14)

## Beschreibung

Die Erfindung betrifft Abtastsonden zur alternativen Verwendung in einem Rastersondenmikroskop, welche einen Mikrobiegebalken aufweisen, an dessen einem Ende eine Abtastspitze zum Abtasten einer Probe und an dessen anderem Ende ein Halteelement zum lösbaren Befestigen der Abtastsonde an einer Sondenhaltevorrichtung angeordnet ist, mit einem an der Sondenhaltevorrichtung festgelegten Auflageelement zum Koppeln und Ausrichten der Abtastsonde, wobei an dem Halteelement und an dem Auflageelement jeweils korrespondierende Ausrichtmittel ausgebildet sind, die das Halteelement beim Koppeln mit dem Auflageelement automatisch reproduzierbar zur Sondenhaltevorrichtung ausrichten, und wobei die Mikrobiegebalken der Abtastsonden eine unterschiedliche Länge aufweisen.

Rastersondenmikroskope sind allgemein bekannt. Sie dienen zum Abtasten der Oberflächen von Proben bis hin zu atomaren Auflösungen. Dazu wird eine im Nanometerbereich scharfe Abtastspitze einer Abtastsonde, die mittels einer Sondenhaltevorrichtung an einem Abtastkopf des Rastersondenmikroskops lösbar befestigt ist, über die Probenoberfläche geführt und die Auslenkung des Mikrobiegebalkens detektiert. Bei Rastertunnelmikroskopen geschieht dies ohne mechanischen Kontakt zur Probe und bei Rasterkraftmikroskopen unter mechanischer Wechselwirkung mit der Probenoberfläche.

Bei der Rastertunnelmikroskopie ist es zwingend, dass die Abtastspitze der Abtastsonde von der Probe getrennt bleibt. Jeder Kontakt zwischen der Abtastsonde und der Probe beschädigt die Abtastsonde im Allgemeinen in einem Maße, dass sie nicht mehr einsatzfähig ist. Bei der Rasterkraftmikroskopie, bei der die Abtastspitze der Abtastsonde während des Abtastens Kontakt mit der Probenoberfläche hat, ist die Abtastspitze durch die mechanische Wechselwirkung einem stetigen Verschteiß ausgesetzt. Demzufolge ist es bei beiden Anwendungen häufig erforderlich, die Abtastsonde in dem Rastersondenmikroskop zu ersetzen. Dies ist in der Regel ein schwieriger Vorgang, da das Detektionssystem des Rastersondenmikroskop nach jedem Wechsel der Abtastsonde wieder auf die exakte Position der Abtastspitze am freien Ende des Mikrobiegbalkens ausgerichtet werden muss, damit die Biegung des Balkens detektiert werden kann.

Ein anderes Problem, das bei der Anwendung von Rastersondenmikroskopen auftritt, besteht darin, nach dem Wechsel der Abtastsonde die Abtastspitze bezüglich der Probe so auszurichten, dass die durch den Sondenwechsel unterbrochene Messung unmittelbar an derselben Stelle wie vor der Unterbrechung fortgesetzt werden kann. Dazu ist es notwendig, die Abtastsonde möglichst genau beim Befestigen an dem Abtastkopf auszurichten, so dass die Abtastspitze die ursprüngliche Abtastposition mit einer hohen Genauigkeit wieder einnimmt.

Abtastköpfe von bekannten Rastersondenmikroskopen weisen eine Sondenhaltevorrichtung auf, die einen einfachen und schnellen Austausch verschlissener Abtastsonden ermöglicht. Dazu ist an der Sondenhaltevorrichtung ein Auflageelement für die Abtastsonde vorgesehen, das an der Sondenhaltevorrichtung festgelegt ist und eine Aufnahme für das Halteelement der Abtastsonde zeigt. Um die Ausrichtung der Abtastsonde zu erleichtern ist häufig eine Fügehilfe, in Form eines U-förmiges Führungselementes, auf der dem Halteelement zugewandten Seite des Auflageelement der Abtastsonde vorgesehen, entlang dem das Halteelement beim Befestigen an dem Auflageelement geführt werden kann, bis das Halteelement vollständig in das Führungselement eingreift und die Abtastsonde bezüglich des Abtastkopfes ausgerichtet wird. Beispielhaft wird auf die Druckschriften EP 0 444 697 A2, JP 2002-168 755, WO 93/18525 und JP 05-133 738 verwiesen.

Die Offenlegungsschrift EP 0 444 697 beschreibt an Rastersondenmikroskop mit einer Abtastsonde mit Mikrobiegebalken, die mit einem Halteelement über ein Auflageelement an einer Sondenhaltevorrichtung des Mikroskops befestigt ist. Das Halteelement und das Auflageelement weisen aufeinander zugeordnete Kontaktflächen, korrespondierende Ausrichtmittel zur reproduzierbaren Ausrichtung der Abtastsonde, insbesondere des Mikrobiegebalkens auf. Dazu ist im Bereich des Halteelements ein definierter Bezugspunkt festgelegt, zu dem die Ausrichtmittel des Halteelements und bei an dem Auflageelement befestigtem Halteelement auch die Ausrichtmittel des Auflageelements einen konstanten Abstand aufweisen.

Die Druckschrift JP 2002-168 755 beschreibt ebenfalls ein Rastersondenmikroskop mit einer Einrichtung zur reproduzierbaren Ausrichtung des Mikrobiegebalkens beim Befestigen des SBM-Sonde an der Sondenhaltevorrichtung des Mikroskops. Die Ausrichtung erfolgt durch eine Klemmeinrichtung der Sondenhaltevorrichtung, die in eine V-förmige Ausnehmung an der Längsseitenflanke des Halteelements der SBM-Sonde eingreift.

Die Internationale Patentanmeldung WO 93/18525 lehrt ein Rastersondenmikroskop mit einer motorisch angetriebenen Justiereinrichtung für die SBM-Sonde. Die Position des Mikrobiegebalkens mit der Abtastspitze wird durch vorgesehene Sensoren dreidimensional erfasst und mittels der motorisch bewegbaren Justiervorrichtung lagegenau eingestellt.

Das Japanische Patentdokument JP 05-133 738 beschreibt einen Halter für eine SBM-Sonde, der an der Sondenhaltevorrichtung lagestabil befestigt ist. Der Halter weist eine U-förmige Querschnittsform auf und führt das Halteelement der Sonde an den Längsseitenflanken. In dem Halter ist das Halteelement der Sonde in den Längsrichtung, dass heißt in Erstreckungsrichtung des Mikrobiegebalkems verschiebbar, um eine justierung den Abtastspitze zu ermöglichen.

Vorbekannte Führungselemente sind nicht genau genug, um nach dem Herausnehmen und Einsetzen einer Abtastsonde die Messung an demselben Abtastpunkt, gekennzeichnet durch die Position der Abtastspitze vor dem Austausch der Abtastsonde, fortzusetzen. Es ist daher wünschenswert, das Auflageelement und die Abtastsonden derart auszubilden, dass eine wiederholbare, genaue Positionierung der Abtastspitze in Bezug zum Abtastkopf und damit zur Probe beim Austausch der Abtastsonde gewährleistet ist, insbesondere auch bei Abtastsonden, deren Mikrobiegebalken eine unterschiedliche Länge aufweisen.

Aufgabe der Erfindung ist es, Abtastsonden zur alternativen Verwendung in einem Rastersondenmikroskop vorzuschlagen, bei der die Abtastsonden an der Sondenhaltevorrichtung schnell und leicht auswechselbar sind und die in Verbindung mit einem an der Sondenhaltevorrichtung festgelegten Auflageelement eine Selbstausrichtung der Abtastsonde mit hoher Genauigkeit ermöglichen, derart, dass die Abtastspitze der Abtastsonden unabhängig von der Länge des Mikrobiegebalkens beim Austausch automatisch mit hoher Wiederholgenauigkeit zur Probe positioniert wird.

Diese Aufgabe wird erfindungsgemäß durch Abtastsonden zur alternativen Verwendung mit den Merkmalen des Anspruchs 1 gelöst, sowie durch ein Verfahren gemäß dem nebengeordneten Verfahrensanspruch. Weitere vorteilhafte Ausgestaltungen sind den jeweiligen rückbezogenen Unteransprüchen zu entnehmen.

Danach ist bei der erfindungsgemäßen Abtastsonden mit einem Mikrobiegebalken unterschiedlicher Länge der jeweilige Abstand zwischen der Abtastspitze und einem definierten Bezugspunkt des Halteelements konstant ausgebildet. Die Lage des Bezugspunktes ist definiert und bei verschiedenen Abtastsonden mit voneinander abweichender Mikrobiegebalkenlänge exakt der gleichen Stelle des Halteelements zugeordnet. Die Stelle ist beispielsweise durch die Entfernung von der Kontur der Abtastsonde definierbar. Der Bezugspunkt ist bei allen Abtastsonden insbesondere im gleichem Abstand und in gleicher Lage zu den Ausrichtmitteln des Halteelementes angeordnet.

Dem definierten Bezugspunkt des Halteelements ist am Auflageelement ein entsprechender Referenzpunkt zugeordnet, der bei montierter Abtastsonde dem Bezugspunkt der Abtastsonde gegenüberliegend angeordnet ist. In definierter Lage zu dem Bezugspunkt bzw. zu dem Referenzpunkt sind auf den einander zugeordneten Seitenflächen des Halteelementes und des Auflageelementes jeweils Ausrichtmittel vorgesehen, die die Abtastsonde beim Koppeln mit dem Auflageelement automatisch reproduzierbar ausrichten. Dabei wird vorzugsweise die Abtastspitze, die bei allen Abtastsonden auch bei unterschiedlichen Längen des Mikrobiegebalkens in einem identischen Abstand zum definierten Bezugspunkt des Halteelements angeordnet ist, mit hoher Wiederholgenauigkeit gegenüber der abzutastenden Probe positioniert.

Die Ausrichtmittel des Auflageelements und des Halteelementes wirken durch Formschluss aufeinander ein. Sie können einander gegenüberliegend oder versetzt zueinander angeordnet sein. Abhängig von deren Anordnung ist es möglich, die Ausrichtmittel komplementär, insbesondere spiegelbildlich auszubilden oder nur einzelne, einander zugeordnete Anlageflächen korrespondierend zu gestalten. Die Ausrichtmittel können vertieft und/oder erhaben sein und eine beliebige Querschnittsform sowie eine gleiche oder unterschiedliche Länge aufweisen. Bevorzugt zeigen die erhabenen Ausrichtelemente ein gegenüber dem Tiefenmaß der vertieften Ausrichtelemente größeres Höhenmaß, was die Selbstausrichtung erleichtert.

Die Genauigkeit der lateralen Ausrichtung wird beispielsweise durch senkrecht zueinander ausgerichtete V-förmigen Stege auf dem Auflageelement und den dazu exakt passenden V-förmigen Gruben auf der Rückseite der Abtastsonden gewährleistet. Die Höhe der Stege und die Tiefe der Gruben sind dabei so gewählt, dass die mit dem Auflageelement gekoppelte Abtastsonde nur auf den Stegen aufliegt, wobei durch die V-Form der Ausrichtelemente in allen drei Raumrichtungen eine optimale Ausrichtung erfolgt. Die Ausrichtelemente von dem Halteelement und dem Auflageelements wirken nach Art eines Schloss/Schltissel-Prinzips zusammen. Sie richten die Abtastsonde beim Auflegen des Halteelements auf das Auflageelement der Abtastsonde und mechanisches Andrücken mit hoher Wiederholgenauigkeit zueinander aus.

Es ist zweckmäßig entlang dem Rand des Auflageelementes auf den dem Mikrobiegebalken entfernten Seiten eine Fügehilfe zur Vorausrichtung der Abtastsonde anzuordnen, die auf die Abtastsonde beim Aufsetzen auf das Auflageelement einwirkt. Durch sie werden die Ausrichtmittel von Auflageelement und Halteelement beim Koppeln derart zueinander positioniert, dass diese beim Absenken des Halteelements auf das Auflageelement aufeinander einwirken können.

Vorteilhafterweise ist bei den Abtastsonden der jeweilige Abstand zwischen dem definierten Bezugspunkt des Halteelements und einer vorderen, dem Mikrobiegebalken zugeordneten Kante des Halteelements variabel in Abhängigkeit von der Länge des Mikrobiegebalkens ausgebildet.

Dadurch wird erreicht, dass die Abtastspitze unabhängig von der Länge des Mikrobiegebalkens immer exakt den gleichen Abstand zu dem Bezugspunkt des Halteelementes und damit zu den an den Bezugspunkt gekoppelten Ausrichtmitteln des Halteelements aufweist. So ist es möglich, die Länge des Mikrobiegebalkens zu variieren, ohne die Ausrichtmittel des Halteelements in ihrer Lage zur Abtastspitze zu verändern. Durch den identischen Abstand zu dem Bezugspunkt weist die Abtastspitze auch immer exakt den gleichen Abstand zum Referenzpunkt des Auflageelementes auf und damit zur entsprechenden Abtastposition der Probe.

Eine weitere vorteilhafte Ausführungsform der Erfindung sieht vor, dass die Abtastsonden eine gleiche Länge von der Abtastspitze bis zu einer hinteren, von dem Mikrobiegebalken entfernten Kante des Halteelementes aufweisen.

Somit ist die hintere Kante des Halteelementes bei allen Abtastsonden im gleichen Abstand zu dem Bezugspunkt und damit zu den Ausrichtmitteln des Halteelementes angeordnet. Durch den identischen Abstand zu dem Bezugspunkt weist die hintere Kante unabhängig von der Länge des Mikrobiegebalkens exakt den gleichen Abstand zum Referenzpunkt des Auflageelementes auf, und somit auch zu dem Ausrichtelementen und zu der Fügehilfe des Auflageelementes, so dass die hintere Kante auch bei Variation der Länge des Mikrobiegebalkens zum Vorausrichten in Richtung des Mikrobiegebalkens der Abtastsonde beim Koppeln wirken kann.

Gemäß dem erfindungsgemäßen Verfahren erfolgt die Herstellung von Abtastsonden zur alternativen Verwendung in der Rastersondenmikroskope gemäß den folgenden Schritten:
- Gestaltung und Herstellung eines gemeinsam verwendbaren Auflageelementes mit Ausrichtmitteln zum Feinausrichten von Abtastsonden mit unterschiedlichen Biegebalkenlängen;
- Gestaltung des dem Auflageelement gegenüberliegenden hinteren Teils des Halteelements unter Ausbildung von zu den Ausrichtmitteln des Auflageelementes korrespondierenden Ausrichtmitteln;
- Bestimmung eines definierten Bezugspunktes in einem Bereich um die Ausrichtmittel des Halteelementes, zu dem die Abtastspitze bei Variation der Länge des Mikrobiegebalkens in einem bestimmten konstanten Abstand anzuordnen ist;
- Gestaltung des dem Mikrobiegebalken zugeordneten vorderen Teils des Halteelementes unter Variation des Abstandes der vorderen, der Abtastspitze zugewandten Kante und dem Bezugspunkt des Halteelementes, bis sich die gewünschte Länge des Mikrobiegebalkens ergibt;
- Gestaltung des Mikrobiegebalkens mit der Abtastspitze an seinem Ende, wobei die Abtastspitze in dem bestimmten Abstand zu dem Bezugspunkt des Halteelementes angeordnet ist; und
- Herstellung der Abtastsonde nach einem der dem Fachmann bekannten, industrieüblichen Herstellungsverfahren.

Der Gegenstand der vorliegenden Erfindung ergibt sich nicht nur aus dem Gegenstand der einzelnen Schutzansprüche, sondern auch aus der Kombination der einzelnen Schutzansprüche untereinander. Alle in den Unterlagen offenbarten Merkmale, insbesondere die in der Zeichnung dargestellte Ausbildung, werden als erfindungswesentlich beansprucht, soweit sie einzeln oder in Kombination miteinander gegenüber dem Stand der Technik neu sind.

Nachfolgend wird die Erfindung anhand eines in der Zeichnung dargestellten Ausführungsbeispiels näher erläutert. Hierbei gehen aus den Figuren der Zeichnung und ihrer Beschreibung weitere wesentliche Merkmale und Vorteile der Erfindung hervor.

Dargestellt wird einen Mechanismus, der eine hochpräzise Selbstausrichtung von Abtastsonden für die Rastersondenmikroskopie mit unterschiedlichen Mikrobiegebalkenlängen beim Wechseln der Abtastsonden ermöglicht. Der Mechanismus besteht aus zwei zusammen wirkenden Komponenten, dem Auflageelement, das fest mit dem Abtastkopf des Rastersondenmikroskops verbunden ist, und speziell angepassten Abtastsonden. Es zeigen:
- Figur 1: eine Ansicht einer an ein Auflageelement gekoppelten Abtastsonde;
- Figur 2: eine Ansicht des Auflageelements und der Abtastsonde aus Figur 1 im nicht gekoppelten Zustand; und
- Figur 3: eine Gegenüberstellung von gekoppelten Abtastsonden gemäß Figur 1 mit unterschiedlich langen Mikrobiegebalken.

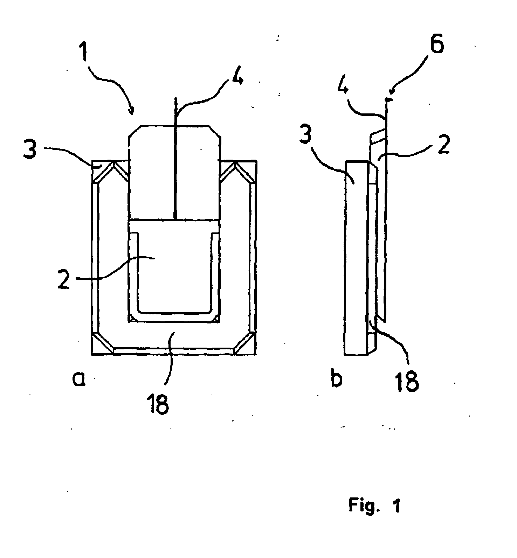

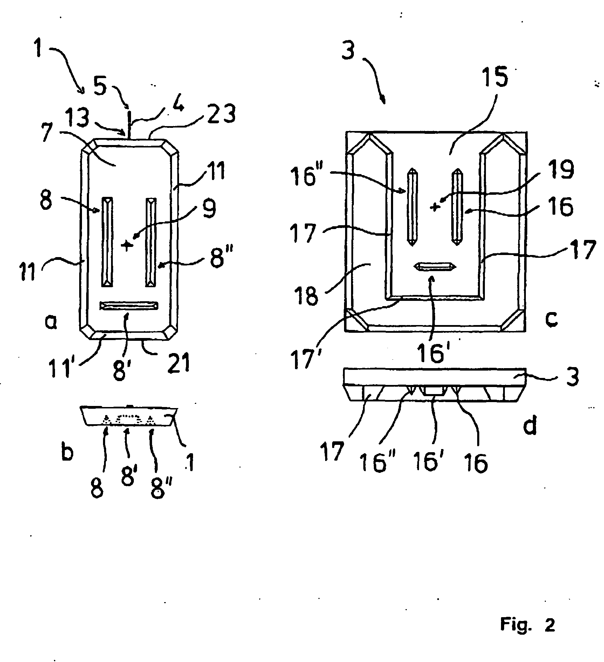

Figur 1 zeigt eine erfindungsgemäße Abtastsonde 1, deren Halteelement 2 mit einem Auflageelement 3 einer in der Zeichnung nicht dargestellten Sondenhaltevorrichtung gekoppelt ist. Sie weist einen an das Halteelement 2 anschließenden Mikrobiegebalken 4 auf, an dessen einem Ende 5 eine Abtastspitze 6, wie aus Figur 1a ersichtlich, senkrecht von dem Mikrobiegebalken 4 absteht. Mit der Abtastspitze 6 wird eine in der Zeichnung nicht dargestellte Probe abgetastet. Das Auflageelement 3 ist an der Sondenhaltevorrichtung unverrückbar festgelegt und die Abtastsonde 1 über das Halteelementes 2 lösbar mit dem Auflageelement 3 verbunden. Das Auflageelement 3 und das Halteelement 2 sind im Wesentlichen quaderförmig ausgebildet und weisen, wie aus den Figuren 2a bis 2d ersichtlich, Vertiefungen und Erhöhungen als Ausrichtmittel 8, 8', 8", 16, 16', 16", 18 auf, über die das Auflageelement 3 und das Halteelement 2 durch Formschluss aufeinander einwirken.

Die Figuren 2, 2a zeigen die Abtastsonde 1 ohne das Auflageelement 3. Auf der dem Auflageelement 3 zugeordneten Anlageseite 7 weist das Halteelement 2 die Ausrichtmittel 8, 8', 8" in Form von Vertiefungen auf, die eine langgestreckte prismatische Form zeigen. Schrägflächen 10, 10' der Ausrichtmittel 8, 8', 8" und geneigte Seitenflächen 11, 11' des Halteelements 2 dienen als Anlageflächen für das Auflageelement 3 und bewirken beim Koppeln des Halteelements 2 mit dem Auflageelement 3 ein automatisches Ausrichten des Halteelementes und damit der gesamten Abtastsonde 1.

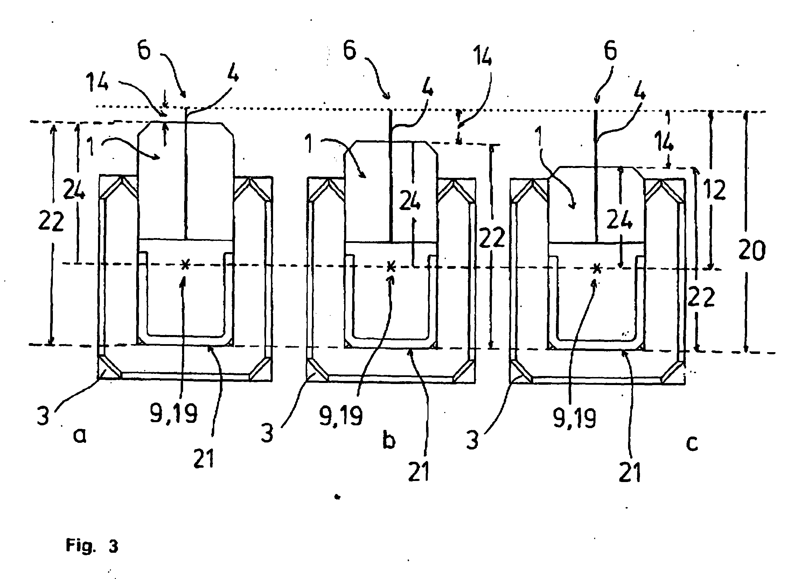

Die Abtastspitze 6, die am Ende 5 des Mikrobiegebalkens 4 vorgesehen ist, weist einen konstanten Abstand 12 zu einem festgelegten Bezugspunkt 9 des Halteelements 2 auf, der bei allen dargestellten Abtastsonden 1, wie aus der Figur 3 ersichtlich, unabhängig von einer jeweiligen Länge 14 des Mikrobiegebalkens 4 ausgebildet ist.

Die Figuren 2c, 2d zeigen das Auflageelement 3 im nicht gekoppelten Zustand. Aus seiner der Anlageseite 7 des Halteelements 2 zugeordneten Flachseite 15 treten Ausrichtmittel 16, 16', 16" hervor, die beim Koppeln der Abtastsonde 1 mit dem Auflageelement 3 auf die Ausrichtmittel 8, 8', 8" einwirken und die Abtastsonde 1 feinpositionieren. Zum Vorausrichten dienen Schrägflächen 17, 17' einer Fügehilfe 18 in Verbindung mit den geneigten Seitenflächen 11, 11' des Halteelements 2.

Die Ausrichtmittel 8, 8', 8" des Halteelementes 2 sind zu einem Bezugspunkt 9 des Haltelementes 2 und die Ausrichtmittel 16, 16', 16" des Auflageelementes 3 sind zu einem Referenzpunkt 19 des Auflageelements 3 zentral angeordnet. Sie zeigen einen gleichen Abstand und eine gleiche Lage zum jeweiligen Bezugspunkt 9 bzw. Referenzpunkt 19. Im gekoppelten Zustand der Abtast-sonde 1 liegen der Bezugspunkt 9 und der Referenzpunkt 19 einander gegenüber, sodass die Ausrichtmittel 8, 8', 8" des Halteelementes 2 und die Ausrichtmittel 16, 16', 16" des Auflageelementes 3 miteinander fluchten. Die Ausrichtmittel 8, 8', 8" und 16, 16', 16" sind im Wesentlichen komplementär zueinander ausgebildet, wobei die Ausrichtmittel 8, 8', 8" des Halteelementes 2 gegenüber den Ausrichtmittel 16, 16', 16" des Auflageelementes 3 eine unterschiedliche Länge auf. Sie greifen, wie in den Figuren 1, 1b dargestellt, formschlüssig ineinander.

Die Figur 3 zeigt drei erfindungsgemäße Abtastsonden 1 mit Mikrobiegebalken 4 unterschiedlicher Länge 14, die beispielhaft in den Figuren 3a, 3b und 3c dargestellt sind. Dabei weist die an dem Ende 5 des jeweiligen Mikrobiegebalkens 4 angeordnete Abtastspitze 6 zu dem jeweiligen Bezugspunkt 9 einen identischen Abstand 12 auf. Eine Gesamtlänge 20 der Abtastsonde 1, die durch das vordere Ende 5 des Mikrobiegebalkens 4 und die hintere Kante 21 des Halteelements 2 bestimmt wird, ist bei allen drei Beispielen konstant ausgebildet. Die unterschiedliche Länge 14 der jeweiligen Mikrobiegebalken 4 wird durch Variation einer Länge 22 des Halteelements 2 erreicht, wodurch durch die an das hintere Ende 13 des Mikrobiegebalkens 4 anschließende vordere Kante 23 des Halteelementes 2 in ihrer Lage zum Bezugspunkt 9 des Halteelements 2 jeweils verändert ist.

## Patentansprüche

1. Abtastsonden (1) zur alternativen Verwendung in einem Rastersondenmikroskop, welche einen Mikrobiegebalken (4) aufweisen, an dessen einem Ende (5) eine Abtastspitze (6) zum Abtasten einer Probe und an deren anderem Ende (13) ein Halteelement (2) zum lösbaren Befestigen der Abtastsonde (1) an einer Sondenhaltevorrichtung angeordnet ist, mit einem an der Sondenhaltevorrichtung festgelegten Auflageelement (3) zum Koppeln und Ausrichten der Abtastsonde (1), wobei an dem Halteelement (2) und an dem Auflageelement (3) jeweils korrespondierende Ausrichtmittel (8, 8', 8"), (16, 16'. 16") ausgebildet sind, die das Halteelement (2) beim Koppeln mit dem Auflageelement (3) automatisch reproduzierbar zur Sondenhaltevorrichtung ausrichten, und wobei die Mikrobiegebalken (4) der Abtastsonden (1) eine unterschiedliche Länge (14) aufweisen, wobei der jeweilige Abstand (12) zwischen der Abtastspitze (6) und einem definierten Bezugspunkt (9) des Halteelementes (2) konstant ausgebildet ist, **dadurch gekennzeichnet, dass** der Bezugspunkt (9) bei allen Abtastsonden (1) im gleichem Abstand und in gleicher Lage zu den Ausrichtmitteln (8, 8', 8") des Haltelementes (2) angeordnet ist.

2. Abtastsonden nach Anspruch 1, **dadurch gekennzeichnet, dass** bei den Abtastsonden (1) der jeweilige Abstand (24) zwischen dem definierten Bezugspunkt (9) des Halteelementes (2) und einer vorderen, dem Mikrobiegebalken (4) zugeordneten Kante (23) des Halteelementes (2) variabel in Abhängigkeit von der Länge (14) des Mikrobiegebalkens (4) ausgebildet ist.

3. Abtastsonden nach Anspruch 1 oder Anspruch 2, **dadurch gekennzeichnet, dass** die Abtastsonden (1) eine gleiche Länge (20) von der Abtastspitze (6) bis zu einer hinteren, von dem Mikrobiegebalken (4) entfernten Kante (21) des Halteelementes (2) aufweisen.

4. Verfahren zur Herstellung von Abtastsonden (1) für ein Rastersondenmikroskop, welche Mikrobiegebalken (4) unterschiedlicher Länge (14) aufweisen, an deren einem Ende (5) eine Abtastspitze (6) zum Abtasten einer Probe und an deren anderem Ende (13) ein Halteelement (2) zum lösbaren Befestigen der Abtastsonden (1) an einer Sondenhaltevorrichtung (3) angeordnet ist, mit einem an der Sondenhaltevorrichtung festgelegten Auflageelement (3) zum Koppeln und Ausrichten der Abtastsonde (1), wobei an dem Halteelement (2) und an dem Auflageelement (3) jeweils korrespondierende Ausrichtmittel (6, 8', 8"), (16, 16', 16") ausgebildet sind, die das Halteelement (2) beim Koppeln mit dem Auflageelement (3) automatisch reproduzierbar zur Sondenhaltevorrichtung ausrichten, wobei insbesondere die Abtastspitze (6) der Abtastsonde (1) lagegenau zur Sondenhaltevorrichtung positioniert wird, mit den folgenden Schritten:
A. Gestaltung und Herstellung eines gemeinsam verwendbaren Auflageelementes (3) mit Ausrichtmitteln (16, 16', 16") zum Feinausrichten von Abtastsonden (1) mit unterschiedlichen Biegebalkenlängen (14);
B. Gestaltung des dem Auflageelement (3) gegenüberliegenden hinteren Teils des Halteelementes (2) unter Ausbildung von zu den Ausrichtmitteln (16, 16', 16") des Auflageelementes (3) korrespondierenden Ausrichtmitteln (8, 8', 8");
C. Bestimmung eines definierten Bezugspunktes (9) in einem Bereich um die Ausrichtmittel (8, 8', 8") des Halteelementes (2), zu dem die Abtastspitze (6) bei Variation der Länge (14) des Mikrobiegebalkens (4) in einem bestimmten, konstanten Abstand (12) anzuordnen ist wobei der Bezugspunk (9) bei allen Abtastsonden (1) im gleichen Abstand und in gleichen lage zu den Ausricht mitteln (8, 8' 8") des Haltelements (2) angeordnet ist.
D. Gestaltung des dem Mikrobiegebalken (4) zugeordneten vorderen Teils des Halteelementes (2) unter Variation des Abstandes (24) der vorderen, der Abtastspitze (6) zugewandten Kante (23) und dem Bezugspunkt (9) des Halteelementes (2), bis sich die gewünschte Länge (14) des Mikrobiegebalkens (4) ergibt;
E. Gestaltung des Mikrobiegebalkens (4) mit der Abtastspitze (6) an seinem Ende (5), wobei die Abtastspitze (6) in dem bestimmten Abstand (12) zu dem Bezugspunkt (9) des Halteelementes (2) angeordnet ist; und
F. Herstellung der Abtastsonde (1) nach einem dem Fachmann bekannten industrieüblichen Herstellungsverfahren.

## Claims

1. Scanning probes (1) for alternative use in a scanning probe microscope where the scanning probes (1) have a micro cantilever beam (4) whose one end (5) has a scanning tip (6) for scanning a sample and whose other end (13) has a holding element (2) for the non-permanent attachment of the scanning probe (1) a probe holder, and where the scanning probes (1) have a support element (3) secured in position on the probe holder for coupling and aligning the scanning probe (1), wherein corresponding alignment elements (8, 8', 8"), (16, 16', 16") are incorporated in the holding element (2) and in the support element (3) that align the holding element (2) in automatically reproducible fashion relative to the probe holder when coupled with the support element (3) and wherein the micro cantilever beams (4) of the scanning probes (1) have different lengths (14) and in each case the distance (12) between the scanning tip (6) and a defined reference point (9) of the holding element (2) is constant, **characterized by** the feature that the reference point (9) is arranged in all cases of the scanning probe (1) at he same distance and in the same position to the alignment elements (8, 8', 8") of the holding element (2).

2. Scanning probes according to Claim 1, **characterized by** the feature(s) that with the scanning probe (1), the distance (24) in each case between the defined reference point (9) of the holding element (2) and a front edge of the holding element (2) that is associated with the micro cantilever beam (4) is variable, depending on the length (14) of the micro cantilever beam (4).

3. Scanning probes according to Claim 1 or Claim 2, **characterized by** the feature(s) that the scanning probes (1) have the same length (20) from the scanning tip (6) to a rear edge (21) of the holding element (2) that faces away from the micro cantilever beam (4).

4. Process for manufacturing scanning probes (1) for a scanning probe microscope where the scanning probes (1) have micro cantilever beams (4) of different lengths (14) whose one end (5) has a scanning tip (6) for scanning a sample and whose other end (13) has a holding element (2) for the non-permanent attachment of the scanning probes (1) to a probe holder, and where the scanning probes (1) have a support element (3) secured in position on the probe holder for coupling and aligning the scanning probe (1), wherein corresponding alignment elements (8, 8', 8"), (16, 16', 16") are incorporated in the holding element (2) and in the support element (3) that align the holding element (2) in automatically reproducible fashion relative to the probe holder when coupled with the support element (3), where particularly the scanning tip (6) of the scanning probe (1) is precisely positioned relative to the probe holder, consisting of the following steps:
A. Design and manufacture of a commonly usable support element (3) with alignment elements (16, 16', 16") for the precision alignment of scanning probes (1) with micro cantilever beams of different lengths (14);
B. Design of the rear part of the holding element (2) opposite the support element (3) while incorporating alignment elements (8, 8', 8") that correspond with the alignment elements (16, 16', 16") of the support element (3);
C. Determination of a defined reference point (9) in an area around the alignment elements (8, 8', 8") of the holding element (2), at a certain constant distance (12) from which the scanning tip (6) is to be arranged when the length (14) of the micro cantilever beam (4) varies;
D. Design of the front part of the holding element (2) associated with the micro cantilever beam (4), with variation of the distance (24) of the front edge (23) facing the scanning tip (6) and the reference point (9) of the holding element (2) until the desired length (14) of the micro cantilever beam (4) is obtained.
E. Design of the micro cantilever beam (4) with the scanning tip (6) at its end (5), with the scanning tip (6) arranged at a certain distance (12) from the reference point (9) of the holding element (2); and
F. Manufacture of the scanning probe (1) by means of a common industrial manufacturing process known to persons skilled in the art.

## Revendications

1. Sondes d'exploration (1) destinée à être utilisées alternativement dans un microscope à balayage, lesquelles présentent une micropoutre flexible (4) à une extrémité (5) de laquelle est disposée une pointe d'exploration (6) servant à explorer un échantillon et à l'autre extrémité (13) de laquelle est disposé un élément de retenue (2) pour la fixation amovible de la sonde d'exploration (1) à un dispositif de retenue de sonde, avec un élément de support (3) fixé au dispositif de retenue de sonde et servant à accoupler et aligner la sonde d'exploration (1), des moyens d'alignement (8, 8', 8"), (16, 16', 16") respectivement correspondants étant formés sur l'élément de retenue (2) et sur l'élément de support (3), qui alignent de manière automatiquement reproductible l'élément de retenue (2) par rapport au dispositif de retenue de sonde lors du couplage avec l'élément de support (3), et les micropoutres flexibles (4) des sondes d'exploration (1) présentant une longueur (14) différente, la distance (12) respective entre la pointe d'exploration (6) et un point de référence (9) défini de l'élément de retenue (2) étant conçue constante, **caractérisées en ce que** le point de référence (9) est disposé, sur toutes les sondes d'exploration (1), à la même distance et dans la même position par rapport aux moyens d'alignement (8, 8', 8") de l'élément de retenue (2).

2. Sondes d'exploration selon la revendication 1, **caractérisées en ce que** dans les sondes d'exploration (1), la distance (24) respective entre le point de référence (9) défini de l'élément de retenue (2) et un bord avant (23), associé à la micropoutre flexible (4), de l'élément de retenue (2) est conçue variable en fonction de la longueur (14) de la micropoutre flexible (4).

3. Sondes d'exploration selon la revendication 1 ou la revendication 2, **caractérisées en ce que** les sondes d'exploration (1) présentent une même longueur (20) de la pointe d'exploration (6) à un bord arrière (21), éloigné de la micropoutre flexible (4), de l'élément de retenue (2).

4. Procédé de fabrication de sondes d'exploration (1) pour un microscope à balayage, lesquelles présentent des micropoutres flexibles (4) de longueur (14) différente à une extrémité (5) desquelles est disposée une pointe d'exploration (6) servant à explorer un échantillon et à l'autre extrémité (13) desquelles est disposé un élément de retenue (2) pour la fixation amovible des sondes d'exploration (1) à un dispositif de retenue de sonde (3), avec un élément de support (3) fixé au dispositif de retenue de sonde et servant à accoupler et aligner la sonde d'exploration (1), des moyens d'alignement (8, 8', 8"), (16, 16', 16") respectivement correspondants étant formés sur l'élément de retenue (2) et sur l'élément de support (3), qui alignent de manière automatiquement reproductible l'élément de retenue (2) par rapport au dispositif de retenue de sonde lors du couplage avec l'élément de support (3), la pointe d'exploration (6) de la sonde d'exploration (1) étant en particulier positionnée de manière exacte par rapport au dispositif de retenue de sonde, comportant les étapes suivantes :
A. configuration et fabrication d'un élément de support (3) utilisable en commun, muni de moyens d'alignement (16, 16', 16") pour l'alignement précis de sondes d'exploration (1) avec différentes longueurs de poutre flexible (14) ;
B. configuration de la partie arrière de l'élément de retenue (2), située en face de l'élément de support (3), en formant des moyens d'alignement (8, 8', 8") correspondants aux moyens d'alignement (16, 16', 16") de l'élément de support (3) ;
C. détermination d'un point de référence (9) défini dans une zone voisine des moyens d'alignement (8, 8', 8") de l'élément de retenue (2), par rapport auquel la pointe d'exploration (6) doit être disposée à une distance constante définie (12) en cas de variation de la longueur (14) de la micropoutre flexible (4), le point de référence (9) étant disposé, sur toutes les sondes d'exploration (1), à la même distance et dans la même position par rapport aux moyens d'alignement (8, 8', 8") de l'élément de retenue (2) ;
D. configuration de la partie avant de l'élément de retenue (2), associée à la micropoutre flexible (4), en faisant varier la distance (24) du bord avant (23), tourné vers la pointe d'exploration (6), et du point de référence (9) de l'élément de retenue (2) jusqu'à ce que la longueur (14) souhaitée de la micropoutre flexible (4) soit obtenue ;
E. configuration de la micropoutre flexible (4) avec la pointe d'exploration (6) à son extrémité (5), la pointe d'exploration (6) étant disposée à la distance (12) déterminée par rapport au point de référence (9) de l'élément de retenue (2) ; et
F. fabrication de la sonde d'exploration (1) selon un procédé de fabrication courant dans l'industrie et connu de l'homme du métier.
